# EUROPEAN PATENT APPLICATION

(11) **EP 1 931 099 A1**
(43) Date of publication of application: **11.06.2008**
(21) Application number: 06025017.2
(22) Date of filing: 04.12.2006
(51) Int. Cl.: H04L 29/06, H04L 29/08

(54) **Method for managing a communication between a server device and a customer device**

(71) Applicant: Alcatel Lucent, 75008 Paris (FR)
(72) Inventor: Liekens, Werner Mario, 2860 Sint Katelijen Waver (BE); Stevens, Christoph, 9190 Stekene (BE); Justen, Pascal Marie Edouard Julien, 1150 Sint-Pieters-Woluwe (BE); Acke, Willem Jozef Amaat, 2820 Rijmenam (BE); Coppens, Jan, 9000 Gent (BE); Bouchat, Christele, 2060 Antwerp (BE)
(74) Representative: Narmon, Gisèle Marie Thérèse

(57) **Abstract**

A method for managing a communication between a server device and a customer device is provided. The method comprises the step of :
- at one of the devices comprising a parameter description for a parameter name in a parameter message. A parameter description is consisting of an hierarchical tree-like structure of characters with each level separated by a predefined character such as a dot; and
- transmitting the parameter message to the other one of the devices. The method further comprises a step of including firstly by the one of the devices in the parameter description between two of such predefined characters (dot) a predefined wildcard character that substitutes other characters of one or more levels and thereby defines according to predefined rules with the parameter description one or more parameters; and a step of reading and/or writing by the other one of the devices the parameter description for configuring and/or monitoring of the one or more parameters of the other one of the devices.

## Description

The present invention relates to a method for managing a communication between a server device and a customer device, and such a server device and a customer device.

Such a method is known from the DSL-Forum that has defined the Customer Premises Equipment Wide area Network Management Protocol, shortly called the WAN Management Protocol in the Technical Report TR-69. This TR069 Management Protocol is intended for communication between Customer Premises Equipment and an Auto-Configuration Server, shortly called an ACS. The version of May 2004 of this Technical Report TR-69 is to be found at *www.dslforum.org.*

This document describes at ***page 9, paragraph 1.6*** the commonly used terminology. The following definitions are relevant for the further reading of this applications.

The ACS is an auto-configuration Server, as the component in a broadband network responsible for auto-configuration of the CPE for advanced services. The CPE is the Customer Premises Equipment whereby a B-NT is a broadband access CPE device capable of being managed by and ACS and being one form of a broadband CPE.

An RPC is a remote procedure call, whereby a "parameter" defines a name-value pair representing a manageable CPE parameter made accessible to an ACS for reading and/or writing.

In this way the TR069 Management Protocol defines a mechanism that encompasses secure auto-configuration of a CPE, and also incorporates other CPE management functions into a common framework. The TR069-Management protocol makes use of these Remote Procedure Calls - RPC Methods that defines a generic mechanism by which an ACS can read (get) or write (set) Parameters to configure a CPE and monitor CPE status and statistics.

**At *page 12 paragraph 2.3.1 the Parameters*** are discussed more in details. There it is described that an RPC Method Specification defines a generic mechanism by which an ACS can read or write Parameters to configure a CPE and monitor CPE status and statistics. Each parameter consists of a name-value pair. The name identifies the particular Parameter, and has a hierarchical structure similar to files in a directory, with each level separated by a "."(dot). The value of a Parameter may be one of several defined data types. Parameters may be defined as read-only or may be defined as read-write. For some predefined objects, multiple instances may be defined. The individual instances are identified by an index number, assigned by the CPE.

A method is described for managing a communication between a server device e.g. an ACS and a customer device e.g. a CPE that comprises the step of:
- at one of the devices e.g. the ACS, comprises a parameter description for a parameter name in a parameter message e.g. a GET message. The parameter description consists of an hierarchical tree-like structure of characters with each level separated by a predefined character (dot); and
- transmitting the parameter message to the other one of the devices e.g. to the CPE; and
- reading and/or writing by the other one of the devices the parameter description for configuring and/or monitoring of one or more parameters of the other one of the devices.

It has to be explained that this step of reading and/or writing is described in the ***TR-069 document at page 12 in paragraph 2.3.1*** that describes the parameters. There it is explained that the parameters may be defined as read-only or read-write. Read-only Parameters may be used to allow an ACS to determine specific CPE characteristics, observe the current state of the CPE, or collect statistics. Writeable Parameters allow an ACS to customize various aspects of the CPE's operation. All writeable Parameters must also be readable. The value of some writeable Parameters may be independently modifiable through means other than the interface defined in this specification (e.g. some Parameters may also be modified via a LAN side auto-configuration protocol).

In this way the protocol supports a discovery mechanism that allows and ACS to determine what Parameters a particular CPE supports, allowing definition of optional parameters as well as supporting straightforward addition of future standard Parameters.

An example of a parameter is hereafter described in an abstract way. The name of the parameter is called e.g. "C". Presume there are 2 values for C existing on the CPE device. The ParameterValue pairs on the device are then e.g.:
1)
   A.B.C.1.D1= Val_D11
   A.B.C.1.D2= Val_D12
   A.B.C.1.D3= Val_D13
   A.B.C.1.D4= Val_D14
2)
   A.B.C.10.D1= Val_D101
   A.B.C.10.D2= Val_D102
   A.B.C.10.D3= Val_D103
   A.B.C.10.D4= Val_D104

In the event when the ACS is interested in the name of "C", but however, doesn't know the number of "C" instances, the ACS can retrieve the information according to two 2 ways which are described her below.
1) A first way to retrieve the parameters, the RPC-method "GetParameterValues" is used, but since the ASC doesn't know the number of instances in the array, a method with two steps with dynamic arrays is used.
Firstly the ACS sends the message "GetParameterNames" with next level on true: GetParameterNames("A.B.C.", nextLevel=true)
Hereby the CPE sends the response with:
GetPorameierNamesResponse("A.B.C.1","A.B.C.10").
In a second step, with this received response from the CPE, the ACS can construct the message GetParameterValues and transmits this request again to the CPE:
GetParameterValues("A.B.C.1.D1","A.B.C.10.D1"),
The CPE generates the response:
GetParameterValuesResponse("A.B.C.D1","Val_D11","A.B. C .10. D1", "Val_D101").

A drawback of this first approach is that the ACS only learns the answers after two roundtrips of question/answer.
2) A second way to obtain the parameter values is immediately with the message GetParameterValues but with an incomplete path:
GetParameterValues("A.B.C.").
The response from the CPE comprises:
GetParameterValuesResponse("A.B.C.1.D1"," Val_D11", "A.B.C.1.D2","Val_D12", "A.B.C.
1.D3","Val_D13",A.B.C.1.D4","Val_D14","A.B.C.10.D1","Val_D101","A.B.C.10.D2",Val_ D102", A.B.C.10.D3","Val_D103",A.B.C.10.D4","Val_D104")

A drawback of this second approach is that the ACS receives too much information besides the values for the distinct parameters it needed to know.

So, the existing solutions provide a lot of load over the network and generate implementation complexity on the ACS. Since the ACS is dealing with millions of devices, scalability becomes with these solutions a concern in any ACS implementation. Latency and too much response time are introduced.

An object of the present invention is to provide a method for managing a communication between a server device and a customer device, and such a server device and a customer device, as described above but that ensures less load over the network and lower latency and reduction of response time.

According to the invention, this object is achieved due to the fact that the present method comprises a step of including firstly by the one of the devices e.g. by the ACS in the parameter description between two of the predefined characters (dot) a predefined wildcard character that substitutes other characters of one or more levels and that thereby defines with the global parameter description according to predefined rules one or more of the parameters. Furthermore, when reading and/or writing by the other one of the devices e.g. by the CPE the parameter description defines the exact set of one or more parameters of the CPE that is to be configured and/or monitored.

By introducing a wildcard character i.e. a character that substitutes for other characters in this regular expression, such as e.g. "*" which means "all", or "**" which means "do not care" or "?" which means "any character", the number of messages needed for having the information that the ACS needs is reduced. Some examples of possible wildcards are provided with its meaning:
"*" to be used between two dots boarding a same level and with the meaning : Undefined number of any characters except "."
   Or
"**" to be used between two dots boarding more then one level with the meaning : Undefined number of any characters
   Or
"?" to be used between two dots boarding a same level and with the meaning : one or any character

The provided solution will now be further explained based upon the above-mentioned abstract example.

The solution of the present application will now be made clear based upon the same example as provided above.
A) Example with "*":
   The ACS is interested in the name of "C", and doesn't know the number of "C" - files. ACS is sending the message to CPE:
   GetParameterValues("A.B.C.*.D1")
   The CPE must now response with all elements defined:
   GetParameterValuesResponse("A.B.C.1.D1","Val_D11","A.B.C.10.D1","Val_D101");
B) Example with "**":
   The ACS is interested in the name of "C", and doesn't know the number of "C"-files. ACS is sending the message to CPE:
   GetParameterValues("A.B.**.D1")
   The CPE must now response with all elements defined:
   GetParameterValuesResponse("A.B.C.1.D1","Val_D11","A.B.C.10.D1","Val_D11"
C) Example with "?":
   The ACS is interested in the name of the "C", and doesn't know the number of "C"-files. The ACS is sending the message to CPE:
   GetParameterValues("A.B.C.?.D1")
   The CPE must now response with all elements defined. The "?" will be replaced by one character and only one character:
   GetParameterValuesResponse("A.B.C.1.D1",'Val_D11");
D) Example with "??":
   The ACS is interested in the name of the "C", and doesnt know the number of "C"-files. The ACS is sending the message to CPE:
   GetParameterValues("A.B.C.??D1")
   And the response will be:
   GetParameterValuesResponse("A.B.C.1.D1","Val_D11",A.B.C.10.D1","Val_D101 ");

In this way, by defining wildcards to replace in a "get" or "set" - message one or more levels between a "dot" of the hierarchical structure of the parameter-name in the message and by making use of wildcards, the number of messages needed for having the information that you need is reduced.

Indeed, as mentioned in the above paragraph, it has to be explained that the implementation of the above described parameter message is not limited to a GET message whereby e.g. the ACS is requesting parameter values for one or more parameters of the CPE by using a parameter description that comprises a wildcard, but might as well be implemented by a SET message whereby e.g. the ACS is imposing parameter values for one or more parameters of the CPE by using a parameter description that comprises a wildcard i.e. configuration of one or more parameters of the CPE by using a parameter description that comprises a wildcard.

A further characterizing embodiment of the present is provided when the server device is implemented by an Auto-configuration server and the customer device is implemented by a customer Premises equipment device and when the communication is a Remote Procedure call according to the TR069 Technical Report of the DSL Forum.

Furthermore, as described above, the predefined wildcard character can be defined to substitute only one character level.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

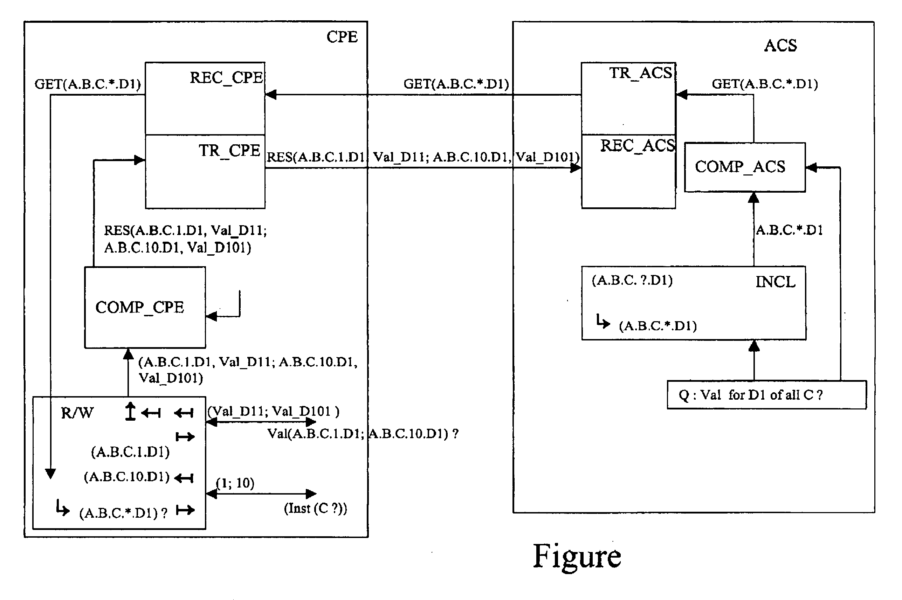

The above and other objects and features of the invention will become more apparent and the invention itself will be best understood by referring to the following description of an embodiment taken in conjunction with the accompanying drawings wherein the Figure represents Customer Premises Equipment CPE and a Auto configuration Server ACS in an Access Communication Network.

The working of the device according to the present invention in accordance with its telecommunication environment that is shown in the Figure will also be explained by means of a functional description of the different blocks shown therein. Based on this description, the practical implementation of the blocks will be obvious to a person skilled in the art and will therefore not be described in details.

It has to be explained that this actual method can be applied in two directions i.e. from the ACS to the CPE and from the CPE to the ACS. However, in order not to overload this description, the method will only be described in the direction from the ACS towards the CPE as starting point.

The ACS comprises a Questioner Q that is coupled to an Includer INC and to a Compriser COMP_ACS. The Questioner Q provides an input to the Includer INC and to the Compriser COMP_ACS. This input comprises the desired parameter information request. This parameter information request can be implemented by e.g. a request for a name of one or more parameters, or a request for the value of one or more parameters, or a request for the setting of one or more parameters with a predefined parameter value. As an example it is preferred to introduce the question "Q: Val for D1 of all C ?". This means that the ACS requires the Value for the D1 character-level of all C character-levels.

The Includer INC generates a parameter description based upon the required parameter information. The parameter description consists of an hierarchical tree-like structure of characters e.g. A, B, C, and/or D1 with each level separated by a predefined character "." (dot). A parameter description identifies hereby one or more parameter names in a parameter message such as e.g. a GET message. It has to be explained that as a matter of example the predefined character is implemented by a "." (dot). However, it has to be clear that other kinds of predefined characters might as well be used to separate the different levels of characters of the hierarchical tree such as e.g. a "," (comma) or a "?" question-mark etc.

However, in the event when the Includer doesn't know the number of instances of one or more of the character-levels, it is not enabled to include the list of parameters for which a value is requested. According to the know methods the ACS should firstly request the CPE for these names. Referring to the Example, the ACS doesn't know the total hierarchical character tree for the following parameters A.B.C.1.D1 or A.B.C.10.D1 since the ACS doesn't know the number of instances of C being, according to this example the two instances "1" and "10". So, when the global character-tree is not knows the Includer INC includes according to the present application, in the parameter description, between two of the predefined characters (dot) that separate the different levels of the hierarchical tree of characters, a predefined wildcard character. This predefined wildcard character substitutes hereby one or more characters of one or more levels and defines thereby with the parameter description according to predefined rules one or more parameters. Referring to the example, since the Includer INC doesn't know the number of instances of the C character, "A.B.C.?.D1", it includes in the parameter description, between two of the predefined characters (dot) that separate the different levels of the hierarchical tree of characters, a predefined wildcard character "*" ==> "A.B.C.*.D1". This predefined wildcard character "*" substitutes in this example the "instance-number of C"-character and defines thereby with the parameter description "A.B.C.*.D1" according to predefined rules one or more parameters i.e. all parameters, including the hierarchical tree up to the level of D1, for each existing C instance.

It has to be remarked here that this actual example, wherein the complete character tree name is not known for the ACS, is not the only situation whereby a wildcard can be introduced. Indeed, also in other situations when e.g. the ACS desires to configure one or more parameters of the CPE with predefined values, and whereby the ACS knows the complete character-tree, the wildcard can be introduced to e.g. make just the global parameter description shorter. Indeed, a long parameter description included in a parameter message might introduce too many delays during transmission and prevent that the message will be received properly.

The includer INC forwards the generated parameter description to the Compriser COMP_ACS, coupled thereto. The Compriser COMP_ACS is included to comprise a parameter description for a parameter name such as e.g. A.B.C.1.D1, A.B.C.10.D1 or A.B.C.*.D1 in a suitable parameter message such as e.g. a GET message or a SET message. According to the actual example, since the ACS desires to learn some values of parameters, the parameter description with the wildcard is included in a GET message.

The compriser COMP_ACS is further coupled to a transmitter TR_ACS to transmit the parameter message to the other one of the devices being, according to this example description, the Customer Premises Equipment CPE.

The CPE comprises on his side a CPE-Receiver REC_CPE to receive the GET parameter message from the Auto-configuration Server ACS and to forward this message to an Enabler R/W to read and/or write of one or more parameters according to the parameter description for configuring and/or monitoring of these one or more parameters of the CPE. This means that the Enabler R/W firstly extracts the Parameter description A.B.C.*.D1 from the parameter message GET and secondly translates the parameter description, A.B.C.*.D1, according to the predefined rules, into a set of one or more parameters i.e. A.B.C.1.D1, A.B.C.10.D1. In order to translate the one or more parameters the Enabler R/W retrieves the number of instances for C i.e. shown by (Inst(C ?)) and (1; 10) in the Figure.

Consequently the Enabler R/W either, as explained above, configures the CPE according to received values or retrieves requested values in order to forward them to the ACS i.e. shown by Val(A.B.C.1.D1; A.B.C.10.D1) ? and (Val_D11; Val_D101) in the Figure.

Each parameter with its value is forwarded to a compriser of the CPE COMP_CPE that comprises all this information in a Response message RES(A.B.C.1.D1, Val_D11; A.B.C.10.D1, Val_D101).

The Response message is forwarded to a transmitter of the CPE TR_CPE coupled thereto that forwards this parameter message to a receiver REC_ACS of the ACS to receive Response messages RES of the Customer Premises Equipment CPE. These Response messages RES include parameter names and/or parameter values in response to the requested information by the ACS.

Hereafter an Example of the above cited Technical Report TR 069 is described in detail. ***Appendix B*** of the above mentioned document describes the defined CPE parameters. In ***table 61 at page 53, of the TR069 Technical Report,** a* list of CPE parameters for an Internet Gateway Device is provided. It is at the hand of one of these parameters that hereafter an actual problem with the discovery mechanism is described.

The Name of the preferred example parameter is VendorConfigFile. For the example, pressume there are 2 VendorConfigFiles existing on the CPE device. The ParameterValue pairs on the device are then e.g.:
1)
   InternetGatewayDevice.DeviceInfo.VendorConfigFile.1.Name = AlcatelConfigFile
   InternetGatewayDevice.DeviceInfo.VendorConfigFile.1.Version = 1.0
   InternetGatewayDevice.DeviceInfo.VendorConfigFile.1.Version.Date = 11/11/2006
   InternetGatewayDevice.DeviceInfo.VendorConfigFile.1.Description = some
   Alcatel description
   And ;
2)
   InternetGatewayDevice.DeviceInfo.VendorConfigFile.10.Nam= LucentConfigFile
   InternetGatewayDevice.DeviceInfo.VendorConfigFile.10.Version = 1.1
   InternetGatewayDevice.DeviceInfo.VendorConfigFile.10.Version.Date =10/11/2006
   InternetGatewayDevice.DeviceInfo.VendorConfigFile.10.Description = some
   Lucent description

In the event when the ACS is interested in the name of the VendorConfigFile, but however, doesn't know the number of config files, the ACS can retrieve the information according to two 2 ways which are described her below.

1) A first way to retrieve the parameters, the RPC-method "GetParameterValues" is used, but since the ASC doesn't know the number of instances in the array, a method with tow steps with dynamic arrays is used.
Firstly the ACS sends the message "GetParameterNames" with next level on true:
GetParameterNames("InternetGatewayDevice.DeviceInfo.VendorConfigFile.",
nextLevel=true)
Hereby the CPE sends the response with:
GetParameterNamesResponse("InternetGatewayDevice.DeviceInfo.VendorConfigFile.1",
"InternetGatewayDevice.Deviceinfo.VendorConfigFile.10").

In a second step, with this received response from the CPE, the ACS can construct the message GetParameterValues and transmits this request again to the CPE:
GetParameterValues("InternefGatewayDevice.DeviceInfo.VendorConfigFile.1.Name",
"InternetGatewayDevice.DeviceInfo.VendorConfigFile.10.Name"),

The CPE generates the response:
GetParameterValuesResponse("InternetGatewayDevice.DeviceInfo.VendorConfigFile.1.N ame","AlcatelConfigFile","InternetGatewayDevice.DeviceInfo.VendorConfigFile.10.Name ","LucentConfigFile").

A drawback of this first approach is that the ACS only learns the answers after two roundtrips of question/answer.

2) A second way to obtain the parameter values is immediately with the message GetParameterValues but with an incomplete path:
GetParameterValues("InternetGatewayDevice.DeviceInfo.VendorConfigFile.").
The response from the CPE comprises:
GetParameterValuesResponse
("InternetGatewayDevice.DeviceInfo.VendorConfigFile.1.Name","AlcatelConfigFile",
"InternetGatewayDevice.DeviceInfo.VendorConfigFile.1.Version","1.0",
"InternetGatewayDevice.DeviceInfo.VendorConfigFile.1.Version.Date","11/11/2006",
"InternetGatewayDevice.DeviceInfo.VendorConfigFile.1.Description","someAlcatel description",
"InternetGatewayDevice.DeviceInfo.VendorConfigFile.10.Name","LucentConfigFile",
"InternetGatewayDevice.DeviceInfo.VendorConfigFile.10.Version","1.1",
"InternetGatewayDevice.DeviceInfo.VendorConfigFile.10.Version.Date","10/11/2006",
"InternetGatewayDevice.DeviceInfo.VendorConfigFile.10.Description","someLucent description").

A drawback of this second approach is that the ACS receives too much information besides the values for the distinct parameters it needed to know.

The solution of the present application will now be made clear based upon the above described example.
A) Example with "*":
   The ACS is interested in the name of the VendorConfigFile, and doesn't know the number of config files. The ACS is sending the message to CPE:
   GetParameterValues("InternetGatewayDevice.DeviceInfo.VendorConfigFile.*.Name")
   The CPE must now response with all elements defined:
   GetParameterValuesResponse("InternetGatewayDevice.DeviceInfo.VendorConfigFile.1.N
   ame","AlcatelConfigFile","InternetGatewayDevice.DeviceInfo.VendorConfigFile. 10.Name
   ","LucentConfigFile");
B) Example with "**":
   The ACS is interested in the name of the VendorCanfigFile, and doesn't know the number of config files. The ACS is sending the message to CPE:
   GetParameterValues("InternetGatewayDevice.DeviceInfo.**.Name")
   The CPE must now response with all elements defined:
   GetParameterValuesResponse("InternetGatewayDevice.
   DeviceInfo.VendorConfigFile.1.Name","AlcatelConfigFile","
   InternetGatewayDevice.DeviceInfo.VendorConfigFile.10.Name","LucentConfigFile");
C) Example with "?":
   The ACS is interested in the name of the VendorConfigFile, and doesnt know the number of config files. The ACS is sending the message to CPE:
   GetParameterValves("InternetGatewayDevice.Devicelnio.**.Name")
   The CPE must now response with all elements defined, whereby "?" is to be replaced by one character and only one character:
   GetParameterValuesResponse("InternetGatewayDevice.DeviceInfo.VendorConfigFile.1.N
   ame","AlcatelConfigFile");
D) Example with "??":
   The ACS is interested in the name of the VendorConfigFile, and doesn't know the number of config files. The ACS is sending the message to CPE:
   GetParameterValues("InternetGatewayDevice.DeviceInfo.??.Name")
   Whereby the CPE must answer with all the known instances:
   GetParameterValuesResponse("InternetGatewayDevice. DeviceInfo.VendorConfig File.1.N ame","AlcatelConfigFile",InternetGatewayDevice.DeviceInfo.VendorConfigFile.10.Name"
   ,"LucentConfigFile").

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for managing a communication between a server device (ACS) and a customer device (CPE), which method comprises the step of:
- at one of the devices (ACS, CPE) comprising a parameter description for a parameter name in a parameter message (GET), said parameter description consisting of an hierarchical tree-like structure of characters with each level separated by a predefined character (dot); and
- transmitting said parameter message (GET) to the other one of the devices (ACS, CPE), **characterized in that** said method comprises a step of including firstly by said one of the devices (ACS, CPE) in said parameter description between two of said predefined characters (dot) a predefined wildcard character that substitutes other characters of one or more levels and thereby defining according to predefined rules with said parameter description (A.B.C.*.D1) one or more parameters (A.B.C.1.D1, A.B.C.10.D1) ; and
- reading and/or writing by said other one of the devices (ACS, CPE) said parameter description (A.B.C.*.D1) for configuring and/or monitoring of said one or more parameters of said other one of the devices (ACS, CPE).

2. The method of claim 1, **characterized in that** said server device is an Auto-configuration server (ACS) and said customer device is a customer Premises equipment device (CPE) and said communication is a Remote Procedure call according to the TR069 Technical Report of the DSL Forum.

3. The method of claim 1, **characterized in that** said predefined wildcard character is substituting one character level.

4. An apparatus for managing a communication between a server device (ACS) and a customer device (CPE), which apparatus is one of the devices (ACS, CPE) and comprises:
- means for comprising a parameter description (COMP) for a parameter name in a parameter message (GET), said parameter description consisting of an hierarchical tree-like structure of characters with each level separated by a predefined character (dot); and
- means for transmitting (TR_ACS, TR_CPE) said parameter message (GET) to the other one of the devices (ACS, CPE), **characterized in that** said apparatus comprises
- means for firstly including (INCL) in said parameter description between two of said predefined characters (dot) a predefined wildcard character that substitutes other characters of one or more levels and thereby defining with said parameter description (A.B.C.*.D1) according to predefined rules one or more parameters (A.B.C.1.D1, A.B.C.10.D1); and
- thereby enabling means (R/W) for reading and/or writing of said other one of the devices (ACS, CPE) said parameter description for configuring and/or monitoring of said one or more parameters (A.B.C.1.D1, A.B.C.10.D1)of said other one of the devices (ACS, CPE).

5. An apparatus for managing a communication between a server device (ACS) and a customer device (CPE), which apparatus is one of the devices (ACS, CPE) and comprises:
- means for receiving (REC_CPE, REC_ACS) a parameter message (GET) from the other one of the devices (ACS, CPE), and
- means for reading and/or writing (R/W) a parameter description for a parameter name in said parameter message (GET) for configuring and/or monitoring of said one device (ACS, CPE), said parameter description consisting of an hierarchical tree-like structure of characters with each level separated by a predefined character (dot) and
**characterized in that** said parameter description includes between two of said predefined characters (dot) a predefined wildcard character that substitutes other characters of one or more levels and that thereby defines with said parameter description (A.B.C.*.D1) according to predefined rules one or more parameters (A.B.C.1.D1, A.B.C.10.D1) for said configuration and/or monitoring of said one device (ACS, CPE).

6. An apparatus according to anyone of claim 4 and claim 5, **characterized in that** said server device is an Auto-configuration server (ACS) and said customer device is a customer Premises equipment device (CPE) and said communication is a Remote Procedure call according to the TR069 Technical Report of the DSL Forum.
